# EUROPEAN PATENT APPLICATION

(11) **EP 4 398 223 A1**
(43) Date of publication of application: **10.07.2024**
(21) Application number: 22865101.4
(22) Date of filing: 02.09.2022
(51) Int. Cl.: G09F 9/30, G06F 3/041, B32B 27/20, G06F 1/16

(54) **DISPLAY DEVICE**

(30) Priority: 03.09.2021 KR 20210117502; 26.04.2022 US 202217729850; 01.09.2022 CN 202211062990; 01.09.2022 CN 202222323264 U
(71) Applicant: Samsung Display Co., Ltd., Yongin-si, Gyeonggi-do 17113 (KR)
(72) Inventor: SIM, Jin Yong, Yongin-si Gyeonggi-do 17113 (KR); SHIN, Jaiku, Yongin-si Gyeonggi-do 17113 (KR); CHOI, Sung Chul, Yongin-si Gyeonggi-do 17113 (KR)
(74) Representative: Marks & Clerk LLP
(86) International application number: PCT/KR2022/013220
(87) International publication number: WO 2023/033599

(57) **Abstract**

The display device according to one embodiment comprises a display module and plates attached to the display module, wherein the plates are formed in multiple layers and comprise a layer having an isotropic elastic modulus and a layer having an anisotropic elastic modulus.

## Description

### [Technical Field]

The present disclosure relates to a display device, and particularly relates to a foldable display device.

### [Background Art]

As information technology develops, importance of display devices that are connection media between users and information is highlighted.

Recently, research and development on foldable display devices, bendable display devices, or rollable display devices using merits of bendable or foldable flexible display panels are progressed. The display devices are applicable to various fields of electronic products such as televisions or monitors as well as portable electronic devices and wearable devices.

The portable electronic devices such as smartphones or tablet PCs are recently becoming lighter and slimmer for the purpose of easy portability, and are developed in many ways for the purpose of convenient use. Particularly, the foldable electronic device including a flexible display provides a relatively wide screen compared to a bar-type electronic device, and its size is reduced when it is folded, to provide better portability, so it has gained the spotlight as an electronic device for satisfying consumers' taste.

### [Disclosure]

### [Technical Problem]

The technical problem to be achieved by the present invention is to provide a display device that is easy to fold.

### [Technical Solution]

In order to achieve the above object, an embodiment of the present invention provides a display device including: a display module; a plate attached to the display module; and a digitizer disposed on a lower portion of the plate, wherein the plate is multi-layered, and the plate includes a layer with an isotropic elasticity coefficient and a layer with an anisotropic elasticity coefficient.

The layer with an anisotropic elasticity coefficient of the plate may include carbon fiber reinforced plastic in which carbon fibers are arranged in one direction.

A difference between the elasticity coefficient of the layer with an anisotropic elasticity coefficient of the plate in a first direction and the elasticity coefficient of the layer with an anisotropic elasticity coefficient of the plate in a second direction that is perpendicular to the first direction may be 2 to 20 times.

The layer with an isotropic elasticity coefficient of the plate may be made of glass fiber reinforced plastic in which glass fibers are regularly arranged.

The plate may include a first layer, a second layer, and a third layer, the first layer and the third layer may include a same material and may have anisotropic elasticity coefficients, and the second layer may have an isotropic elasticity coefficient.

The display device may include a first auxiliary layer contacting the first layer and disposed on an outermost side of the plate and a second auxiliary layer contacting the third layer and disposed on an outermost side of the plate, and the first auxiliary layer and the second auxiliary layer may include metals.

The display device may include a first auxiliary layer disposed between the first layer and the second layer and a second auxiliary layer disposed between the third layer and the second layer, and the first auxiliary layer and the second auxiliary layer may include metals.

The plate may include a first layer, a second layer, and a third layer, the first layer and the third layer may include a same material and may have isotropic elasticity coefficients, and the second layer may have an anisotropic elasticity coefficient.

The display device may include a first auxiliary layer contacting the first layer and disposed on an outermost side of the plate and a second auxiliary layer contacting the third layer and disposed on an outermost side of the plate, and the first auxiliary layer and the second auxiliary layer may include metals.

The display device may include a first auxiliary layer disposed between the first layer and the second layer and a second auxiliary layer disposed between the third layer and the second layer, and the first auxiliary layer and the second auxiliary layer may include metals.

A thickness of the plate may be 150 µm to 250 µm.

A thickness of the layer with an anisotropic elasticity coefficient of the plate may be 100 µm to 150 µm.

A thickness of the layer with an isotropic elasticity coefficient of the plate may be 10 µm to 50 µm.

The display device may be folded with respect to a folding axis.

The plate may include a folding area overlapping the folding axis and a peripheral folding area not overlapping the folding axis, and the plate may include a plurality of holes disposed in the folding area.

The folding area and the peripheral folding area may be bent in opposite directions.

Regarding the layer with an anisotropic elasticity coefficient of the plate, the elasticity coefficient that is perpendicular to the folding axis may be less than the elasticity coefficient that is parallel to the folding axis.

Regarding the layer with an anisotropic elasticity coefficient of the plate, a difference between the elasticity coefficient that is perpendicular to the folding axis and the elasticity coefficient that is parallel to the folding axis may be 1.5 to 6 times.

Another embodiment of the present invention provides a foldable display device including: a display module folded with respect to a folding axis; and a plate attached to the display module, wherein an elasticity coefficient of the plate in a direction that is perpendicular to the folding axis is less than an elasticity coefficient that is parallel to the folding axis.

The plate may have a multilayer structure, and the plate may include a carbon fiber reinforced plastic layer in which carbon fibers are arranged in one direction and a glass fiber reinforced plastic layer in which glass fibers are arranged in a regular direction.

The plate may include a first layer, a second layer, and a third layer, the first layer and the third layer may have anisotropic elasticity coefficients and the second layer may have an isotropic elasticity coefficient, or the first layer and the third layer may have isotropic elasticity coefficients and the second layer may have an anisotropic elasticity coefficient.

The plate may include a folding area overlapping the folding axis and a peripheral folding area not overlapping the folding axis, the plate may include a plurality of holes disposed in the folding area, and a thickness of the peripheral folding area of the plate may be uniform.

The folding area and the peripheral folding area of the plate may be bent in opposite directions.

The foldable display device may include a cover window disposed on a display module, and a digitizer disposed below the plate, and the digitizer may include a first digitizer disposed on a left with respect to the folding axis and a second digitizer disposed with respect to the folding axis.

### [Advantageous Effects]

As described above, the display device according to the present embodiment is easy to fold because the plate has a multilayer structure including a layer with an isotropic elastic modulus and a layer with an anisotropic elastic modulus.

### [Description of the Drawings]

FIG. 1 shows a display panel according to the present embodiment.
FIG. 2 shows a display device including a display panel of FIG. 1.
FIG. 3 shows a display panel bent in one direction.
FIG. 4 shows a display device including a display panel of FIG. 3.
FIG. 5 shows a plate from among a display panel according to the present embodiment.
FIG. 6 shows a cross-section of a display device including a plate of FIG. 5.
FIG. 7 shows a same region as FIG. 5, regarding a display device when a plate is a single layer of a metal.
FIG. 8 shows a same cross-section as FIG. 6, regarding a display device when a plate is a single layer of a metal.
FIG. 9 shows a cross-section of a plate according to the present embodiment.
FIG. 10 shows a first layer of FIG. 9.
FIG. 11 shows a second layer of FIG. 9.
FIG. 12 shows a plate according to another embodiment.
FIG. 13 shows a plate according to another embodiment.
FIG. 14 shows a plate according to another embodiment.
FIG. 15 shows a plate according to another embodiment.
FIG. 16 shows a plate according to another embodiment.
FIG. 17 shows a cross-section of a display device according to the present embodiment with constituent elements.
FIG. 18 shows a relationship between moduli of a first layer, a second layer, and a third layer of a plate and a folding axis.
FIG. 19 and FIG. 20 show a method for forming a hole in a folding area of a plate.
FIG. 21 shows a perspective view of a display device according to an embodiment.
FIG. 22 shows an exploded perspective view of a display device according to an embodiment.
FIG. 23 shows a block diagram of a display device according to an embodiment.
FIG. 24 shows a perspective view of a display device according to an embodiment.
FIG. 25 shows a cross-sectional view of a display device according to an embodiment.
FIG. 26 shows an equivalent circuit diagram of a pixel according to an embodiment.

### [Best mode for Invention]

An embodiment of the present invention provides a display device including: a display module; a plate attached to the display module; and a digitizer disposed on a lower portion of the plate, wherein the plate is multi-layered, and the plate includes a layer with an isotropic elasticity coefficient and a layer with an anisotropic elasticity coefficient.

Another embodiment of the present invention provides a foldable display device including: a display module folded with respect to a folding axis; and a plate attached to the display module, wherein an elasticity coefficient of the plate in a direction that is perpendicular to the folding axis is less than an elasticity coefficient that is parallel to the folding axis.

### [Mode for Invention]

The present invention will be described more fully hereinafter with reference to the accompanying drawings, in which embodiments of the invention are shown. As those skilled in the art would realize, the described embodiments may be modified in various different ways, all without departing from the spirit or scope of the present invention.

Parts that are irrelevant to the description will be omitted to clearly describe the present invention, and the same elements will be designated by the same reference numerals throughout the specification.

The size and thickness of each configuration shown in the drawings are arbitrarily shown for better understanding and ease of description, but the present invention is not limited thereto. In the drawings, the thicknesses of layers, films, panels, regions, etc., are enlarged for clarity. The thicknesses of some layers and areas are exaggerated for convenience of explanation.

It will be understood that when an element such as a layer, film, region, or substrate is referred to as being "on" another element, it can be directly on the other element or intervening elements may also be present. In contrast, when an element is referred to as being "directly on" another element, there are no intervening elements present. The word "on" or "above" means positioned on or below the object portion, and does not necessarily mean positioned on the upper side of the object portion based on a gravitational direction.

Unless explicitly described to the contrary, the word "comprise" and variations such as "comprises" or "comprising" will be understood to imply the inclusion of stated elements but not the exclusion of any other elements.

The phrase "in a plan view" means viewing an object portion from the top, and the phrase "in a cross-sectional view" means viewing a cross-section of which the object portion is vertically cut from the side.

A display device according to an embodiment will now be described with reference to accompanying drawings.

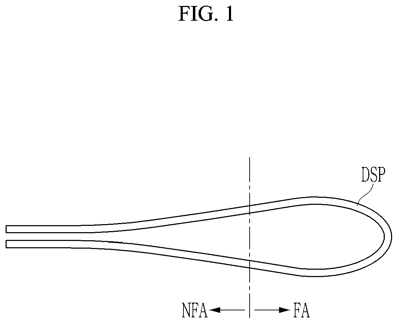

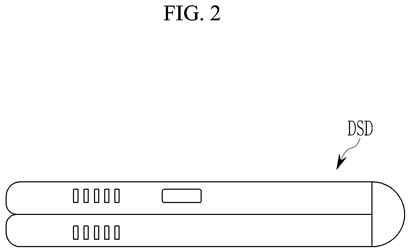

FIG. 1 and FIG. 2 show a display device according to the present embodiment. FIG. 2 shows a display device (DSD) according to the present embodiment, and FIG. 1 shows a display panel (DSP) included at an inside of what is shown in FIG. 2.

Referring to FIG. 2, the display device (DSD) according to the present embodiment is a foldable display device. As shown in FIG. 2, the display device (DSD) may be completely folded with no separation space therebetween. As shown in FIG. 2, in order for the display device (DSD) to be completely folded, the display panel (DSP) positioned in the display device (DSD) may be bent like a shape shown in FIG. 1.

That is, as shown in FIG. 1, the display panel (DSP) includes a folding area (FA) and a peripheral folding area (NFA). A direction in which the folding area (FA) is bent may be different from a direction in which the peripheral folding area (NFA) is bent.

That is, when the direction in which the folding area (FA) is bent is defined to be a forward direction, the peripheral folding area (NFA) may be bent in a reverse direction. As the display panel (DSP) is folded in the forward direction and the reverse direction depending on areas as described above, the display device (DSD) may be completely folded as shown in FIG. 2.

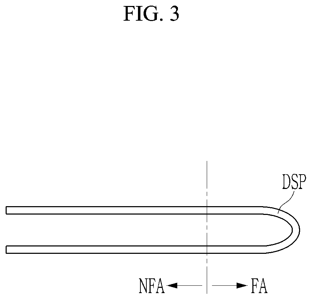

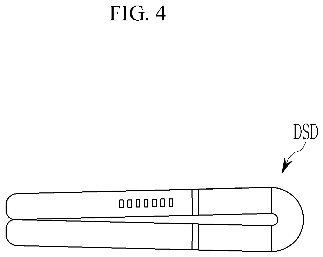

FIG. 3 shows a display panel (DSP) bent in one direction. FIG. 4 shows a display device including a display panel of FIG. 3.

Referring to FIG. 3, the folding area (FA) of the display panel (DSP) shown in FIG. 3 is bent in the forward direction, and the peripheral folding area (NFA) is not bent. The display device (DSD) including the display panel (DSP) may not be completely folded and there may be a gap therebetween as shown in FIG. 4. When the gap is positioned therebetween as noted above, dust may be positioned inside in a use condition. When an impact is applied to the display device (DSD) by the gap between the folded display device (DSD), the display device (DSD) may be damaged.

However, regarding the display device according to the present embodiment, as the display panel (DSP) is folded in the forward direction and the reverse direction depending on positions, the display device (DSD) may be completely folded as shown in FIG. 1. Therefore, durability of the display device (DSD) may be increased and the use environment may be improved.

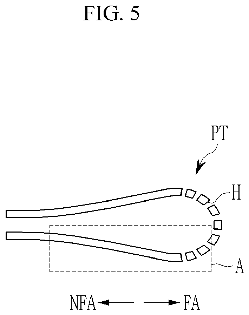

FIG. 5 shows a plate (PT) from among a display panel (DSP) according to the present embodiment. To be additionally described hereinafter, the plate (PT) may be adhered through the display module and the adhesive layer to support the display module and help bending of the display device. Referring to FIG. 5, the plate (PT) according to the present embodiment includes a folding area (FA) and a peripheral folding area (NFA), and includes a plurality of holes (H) positioned in the folding area (FA). The folding area (FA) may be bent in the forward direction by the holes (H). A curvature radius by which the folding area (FA) is bent may be 2 mm to 3 mm. This is, however, an example, and the present invention is not limited thereto.

Referring to FIG. 5, regarding the plate (PT) according to the present embodiment, the peripheral folding area (NFA) may be bent in an opposite direction of the direction in which the folding area (FA) is bent (i.e., the reverse direction). The curvature radius by which the peripheral folding area (NFA) is bent may be greater than the curvature radius by which the folding area (FA) is bent. In detail, the curvature radius by which the peripheral folding area (NFA) is bent may be 20 mm to 30 mm. This is, however, an example, and the present invention is not limited thereto.

For example, a difference between the curvature radius by which the folding area (FA) is bent and the curvature radius by which the peripheral folding area (NFA) is bent may be 5 times to 20 times. That is, the folding area (FA) may be bent with a small curvature radius to completely fold the display panel (DSP) in half, and the peripheral folding area (NFA) may be bent with a greater curvature radius in the opposite direction of the folding area (FA) to remove the gap between the folded display panel (DSP).

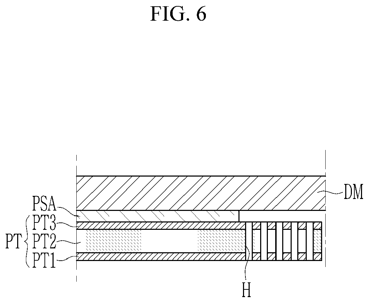

FIG. 6 shows a cross-section of a display device (DSD) including a plate (PT) of FIG. 5. FIG. 6 shows a cross-section of a display device including a plate (PT) with a portion marked with A in FIG. 5.

Referring to FIG. 6, the display device (DSD) includes a display module (DM), and a plate (PT) attached to the display module (DM) through an adhesive layer (PSA). The plate (PT) may have a multilayer structure including a first layer (PT1), a second layer (PT2), and a third layer (PT3). A plurality of holes (H) may be positioned in the folding area (FA) of the plate (PT). Therefore, the plate (PT) and the display panel (DSP) including the same are bent to realize the foldable display device.

The first layer (PT1) and the third layer (PT3) of the plate (PT) may include a same material. The second layer (PT2) positioned between the first layer (PT1) and the third layer (PT3) may have a different material from the first layer (PT1) and the third layer (PT3).

The plate (PT) may have odd-numbered layers. That is, the layers positioned at the respective outermost sides of the plate (PT) may include the same material.

To be described hereinafter, the first layer (PT1) and the third layer (PT3) may be made of materials of which elasticity coefficients have different anisotropic properties according to directions, and the second layer (PT2) may be made of a material of which the elasticity coefficient has the same isotropic property according to the directions. In another way, the first layer (PT1) and the third layer (PT3) may have materials of which the elasticity coefficients have the same isotropic property according to the directions, and the second layer (PT2) may have a material of which the elasticity coefficient has different anisotropic properties according to the directions.

When the plate (PT) has a stacked structure of materials with the isotropic elasticity coefficient/the anisotropic elasticity coefficient, the display panel and the display device having the structure described with reference to FIG. 1 and FIG. 2 may be realized without additional changes of the structure. That is, without additional changes of the structure, the display device that can be completely folded without a gap may be provided.

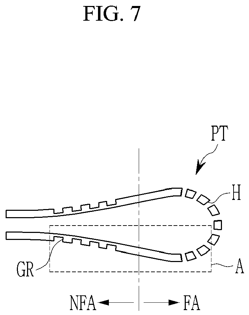

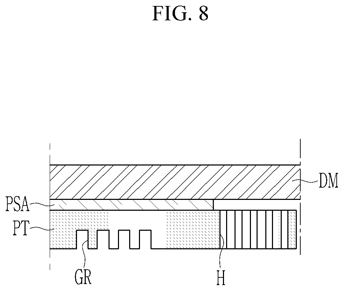

FIG. 7 shows a same region as FIG. 5, regarding a display device when a plate (PT) is a single layer of a metal, and FIG. 8 shows a same cross-section as FIG. 6, regarding a display device when a plate (PT) is a single layer of a metal.

Referring to FIG. 7 and FIG. 8, the plate (PT) is a single layer in the present embodiment. A plurality of grooves (GR) are formed in the peripheral folding area (NFA) so as to bend the peripheral folding area (NFA) in the reverse direction. When the plate (PT) is a single layer, it is difficult to allow different bending directions in the folding area (FA) and the peripheral folding area (NFA), so the grooves (GR) are positioned in the peripheral folding area (NFA) as shown in FIG. 7 and FIG. 8. The grooves (GR) in the peripheral folding area (NFA) do not penetrate the plate (PT), differing from the holes (H) in the folding area (FA). The above-formed grooves (GR) reduce the elasticity coefficient of the peripheral folding area (NFA) so that it may be bent in the reverse direction from the folding area (FA).

However, when reverse bending of the peripheral folding area (NFA) is realized by a method for forming grooves (GR) in a plate (PT), the grooves (GR) may not be uniformly formed in the plate (PT). Therefore, a taper may be generated by the nonuniformity of thicknesses of the grooves (GR), and an etching process for forming grooves (GR) must be added, so a processing time may be increased. Materials for forming the grooves (GR) in the plate (PT) are limited. For example, it is relatively easy to form the grooves (GR) when the plate (PT) is a metal, and it is difficult to form uniform grooves (GR) when the plate (PT) is made of reinforced plastic such as carbon fiber reinforced plastic or glass fiber reinforced plastic.

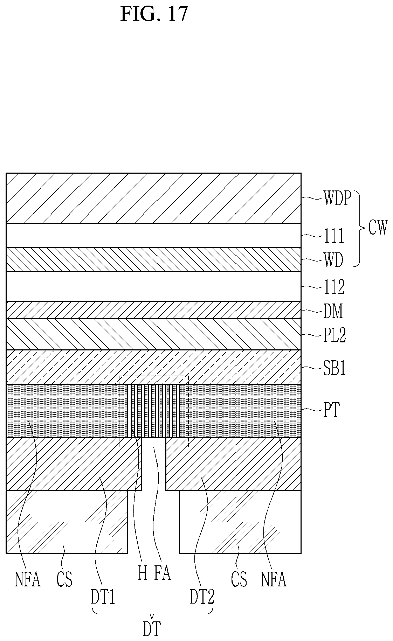

As shown in FIG. 7 and FIG. 8, when the plate (PT) includes a metal, this may reduce a recognition rate of a digitizer (not shown) positioned at a bottom of the plate (PT). That is, when the plate (PT) and the digitizer (not shown) respectively include a conductive material, the recognition rate of the digitizer may be reduced. Effects thereof will be described in detail with reference to FIG. 17 in a later portion of the present specification.

In the case of the plate (PT) according to the present embodiment and the display device (DSD) including the plate (PT), the plate (PT) is formed with a stacked structure of materials with the isotropic elasticity coefficient/the anisotropic elasticity coefficient, thereby realizing the reverse direction bending of the peripheral folding area of the display panel without additional formation of grooves. The plate (PT) may include a first layer, a second layer, and a third layer, and the first layer and the third layer may be anisotropic and the second layer may be isotropic. In another way, the first layer and the third layer may be isotropic and the second layer may be anisotropic. As the plate (PT) includes isotropic and anisotropic layers, rigidity of the plate (PT) may be maintained and the plate (PT) may be well bent. As the plate (PT) includes not the metal but the reinforced plastic, the recognition rate of the digitizer (not shown) including a metal positioned at the bottom may not be hindered.

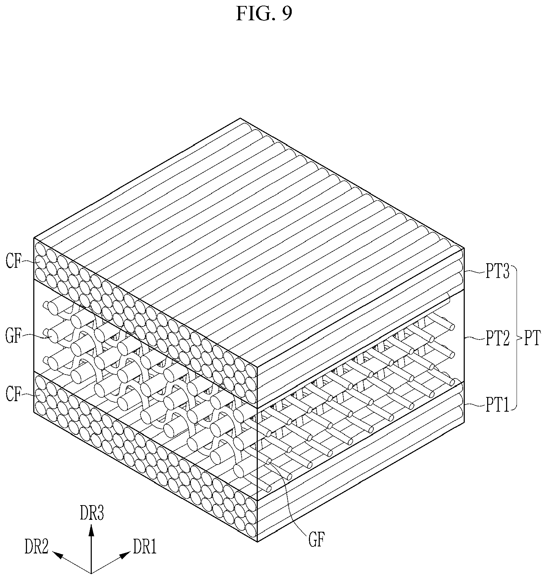

FIG. 9 shows a cross-section of a plate (PT) according to the present embodiment. Referring to FIG. 9, the plate (PT) includes a first layer (PT1), a second layer (PT2), and a third layer (PT3).

The first layer (PT1) and the third layer (PT3) may be made of carbon fiber reinforced plastic (CFRP). The carbon fiber reinforced plastic (CFRP) represents plastic hardened by impregnating resin into carbon fibers (CF). As shown in FIG. 9, regarding the carbon fiber reinforced plastic of the first layer (PT1) and the third layer (PT3), the carbon fibers (CF) may be arranged in a first direction (DR1). The display device including the plate (PT) according to the present embodiment is bent in a second direction (DR2). That is, regarding the plate (PT) according to the present embodiment, the direction (DR1) in which the carbon fibers (CF) are arranged is perpendicular to the direction (DR2) in which the display device is bent. Therefore, although to be additionally described hereinafter, the display device may be easily bent without forming additional grooves (GR) in the plate (PT), and particularly as shown in FIG. 1, the peripheral folding area (NFA) and the folding area (FA) may be bent in the different directions.

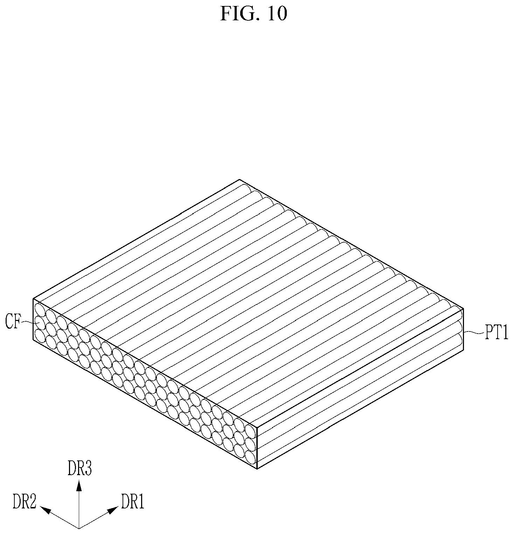

FIG. 10 shows a first layer (PT1) of FIG. 9. As shown in FIG. 10, the carbon fibers (CF) are arranged in the first direction (DR1), and the elasticity coefficients of the first layer (PT1) may be different according to directions. That is, the elasticity coefficient in the first direction (DR1) in which the carbon fibers are arranged may be high, and the elasticity coefficient in the second direction (DR2) that is perpendicular to the first direction (DR1) may be low.

For example, the elasticity coefficient in the first direction (DR1) may be 100 MPa to 200 MPa. The elasticity coefficient in the second direction (DR2) may be 1 MPa to 50 MPa. In an embodiment, a difference of elasticity coefficients of the first layer (PT1) of the plate (PT) in the first direction (DR1) and the second direction (DR2) may be twice to twenty times.

The display device including the plate (PT) according to the present embodiment is bent in the second direction (DR2). Here, the elasticity coefficient in the second direction (DR2) is low, so the display device may be easily bent. FIG. 10 describes the first layer (PT1), the first layer (PT1) and the third layer (PT3) include the same material according to an embodiment described with reference to FIG. 9, and the description of FIG. 10 is applicable to the third layer (PT3) of FIG. 9.

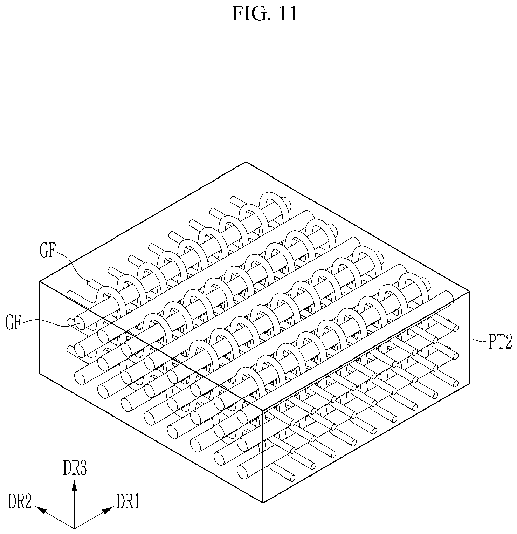

FIG. 11 shows a second layer (PT2) of FIG. 9. The second layer (PT2) may be made of glass fiber reinforced plastic (GFRP). The glass fiber reinforced plastic (GFRP) is a combined material of glass fibers and a thermosetting resin such as an unsaturated polyester or an epoxy resin.

As shown in FIG. 11, glass fibers (GF) are uniformly arranged in a constant direction on the second layer (PT2) including glass fiber reinforced plastic. That is, differing from the carbon fibers in the carbon fiber reinforced plastic shown in FIG. 10, the glass fibers (GF) are uniformly arranged in the first direction (DR1) and the second direction (DR2). That is, the glass fibers (GF) may be arranged in a weaving way. Therefore, the elasticity coefficient of the second layer (PT2) in the first direction (DR1) may correspond to the elasticity coefficient of the same in the second direction (DR2). For example, the elasticity coefficients of the second layer (PT2) including glass fiber reinforced plastic in the first direction (DR1) and the second direction (DR2) may be 10 MPa to 30 MPa. This is, however, an example, and the present invention is not limited thereto.

Referring to FIG. 9, the plate (PT) according to the present embodiment has a structure in which the second layer (PT2) with the isotropic elasticity coefficient is positioned between the first layer (PT1) and the third layer (PT3) with the anisotropic elasticity coefficients. Therefore, the display device maintaining rigidity of the plate (PT) and including the plate (PT) is bent well. As shown in FIG. 1, the display panel in which the folding area (FA) is bent in the forward direction and the peripheral folding area (NFA) is bent in the opposite direction to the folding area (FA).

Referring to FIG. 9, an entire thickness of the plate (PT) may be 150 µm to 250 µm. When the thickness of the plate (PT) is less than 150 µm, the plate (PT) may not sufficiently support the display module, and when the thickness of the plate (PT) is greater than 250 µm, the plate (PT) may become too thick to be well bent.

The thicknesses of the first layer (PT1) and the third layer (PT3) may be respectively 100 µm to 150 µm. The thickness of the second layer (PT2) may be 10 µm to 50 µm. This indicates a range by which the plate (PT) may have an appropriate anisotropic elasticity coefficient within an optimal thickness range (150 µm to 250 µm) of the plate (PT). That is, when the thickness of the second layer (PT) is less than 10 µm, influences of the first layer (PT1) and the third layer (PT3) with high moduli may become strong and the plate (PT) may not be well bent. This may be the same when the thicknesses of the first layer (PT1) and the third layer (PT3) may be respectively greater than 150 µm.

When the thickness of the second layer (PT2) is greater than 50 µm, the plate (PT) may be insufficiently anisotropic. The modulus of the glass fiber reinforced plastic of the second layer (PT2) is less than the moduli of the carbon fiber reinforced plastic of the first layer (PT1) and the third layer (PT3), so when the thickness of the second layer (PT2) increases, durability of the plate (PT) may be reduced. This may be the same when the thicknesses of the first layer (PT1) and the third layer (PT3) are less than 100 µm.

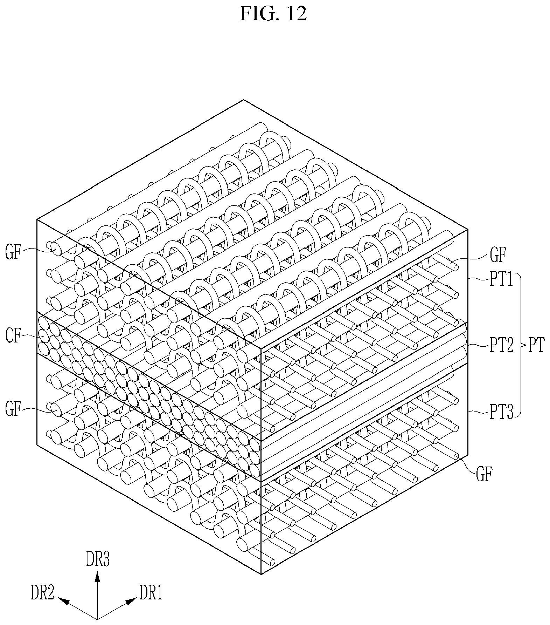

FIG. 12 shows a plate (PT) according to another embodiment. An embodiment described with reference to FIG. 9 describes a stacked structure of CFRP-GFRP-CFRP (or a CGC structure), and an embodiment of FIG. 12 has a structure of GFRP-CFRP-GFRP in order (or a GCG structure) which is different from what is shown in FIG. 9.

That is, the first layer (PT1) and the third layer (PT3) of the plate (PT) may be made of glass fiber reinforced plastic (GFRP) in FIG. 12. The descriptions of the first layer (PT1) and the third layer (PT3) including glass fiber reinforced plastic (GFRP) correspond to the descriptions provided with reference to FIG. 11. The descriptions provided with reference to FIG. 11 are applied thereto in a same way. That is, the first layer (PT1) and the third layer (PT3) may have isotropic elasticity coefficients. For example, the elasticity coefficients of the first layer (PT1) and the third layer (PT3) including glass fiber reinforced plastic in the first direction (DR1) and the second direction (DR2) may be 10 MPa to 30 MPa.

The thicknesses of the first layer (PT1) and the third layer (PT3) may be respectively 10 µm to 50 µm.

Referring to FIG. 12, the second layer (PT2) may be made of carbon fiber reinforced plastic (CFRP). The descriptions of the second layer (PT2) including carbon fiber reinforced plastic (GFRP) correspond to the descriptions provided with reference to FIG. 10. The descriptions provided with reference to FIG. 10 are applied thereto in a same way. That is, the elasticity coefficient of the second layer (PT2) may be changed depending on the directions. The elasticity coefficient in the first direction (DR1) in which the carbon fibers are arranged may be high, and the elasticity coefficient in the second direction (DR2) that is perpendicular to the first direction (DR1) may be low. For example, the elasticity coefficient in the first direction (DR1) may be 100 MPa to 200 MPa. The elasticity coefficient in the second direction (DR2) may be 1 MPa to 50 MPa.

In an embodiment, the difference of the elasticity coefficients of the second layer (PT2) of the plate (PT) according to the present embodiment in the first direction (DR1) and the second direction (DR2) may be twice to twenty times.

The thickness of the second layer (PT2) may be 100 µm to 150 µm.

In an embodiment described with reference to FIG. 12, the entire thickness of the plate (PT) may be 150 µm to 250 µm. When the thickness of the plate (PT) is less than 150 µm, the plate (PT) may not sufficiently support the display module, and when the thickness of the plate (PT) is equal to or greater than 250 µm, the plate (PT) may be substantially thick and may not be well bent.

FIG. 9 and FIG. 12 show that the plate (PT) has a triple-layered structure including reinforced plastic, and the plate (PT) may further include an auxiliary layer for the purpose of radiation and reinforcement of rigidity.

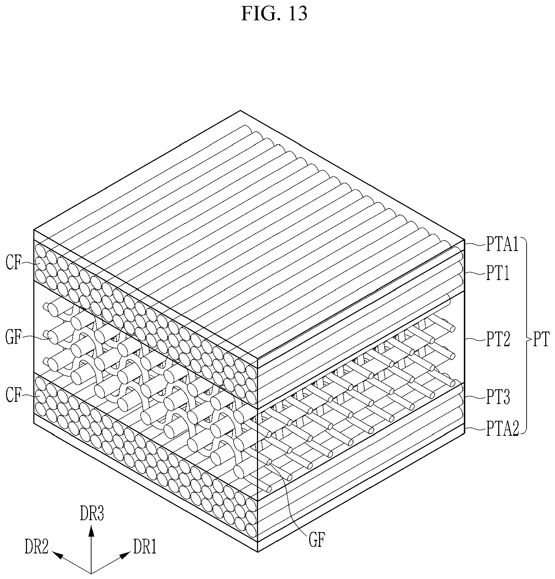

FIG. 13 shows a plate (PT) according to another embodiment. Referring to FIG. 13, the plate (PT) according to the present embodiment corresponds to the embodiment described with reference to FIG. 9 except that the plate (PT) further includes a first auxiliary layer (PTA1) contacting the first layer (PT1), and a second auxiliary layer (PTA2) contacting the third layer (PT3). No detailed descriptions of the same constituent element will be provided. The descriptions of the first layer (PT1) to the third layer (PT3) correspond to the descriptions provided with reference to FIG. 9.

The first auxiliary layer (PTA1) and the second auxiliary layer (PTA2) are positioned on respective outermost sides of the plate (PT). The first auxiliary layer (PTA1) and the second auxiliary layer (PTA2) may include metals. For example they may include at least one of copper, stainless steel (SUS), aluminium (Al), and graphite.

The first auxiliary layer (PTA1) and the second auxiliary layer (PTA2) may improve the radiation characteristic of the plate (PT) and may reinforce rigidity.

The thicknesses of the first auxiliary layer (PTA1) and the second auxiliary layer (PTA2) may be 5 µm to 20 µm. When the thicknesses are equal to or less than 5 µm, they may not have sufficient rigidity and radiation characteristic, and when the thicknesses are equal to or greater than 20 µm, their folding characteristics may be reduced.

FIG. 13 shows the configuration in which the first auxiliary layer (PTA1) and the second auxiliary layer (PTA2) are positioned on the outermost side of the plate (PT), and the first auxiliary layer (PTA1) and the second auxiliary layer (PTA1) may be positioned inside the plate (PT).

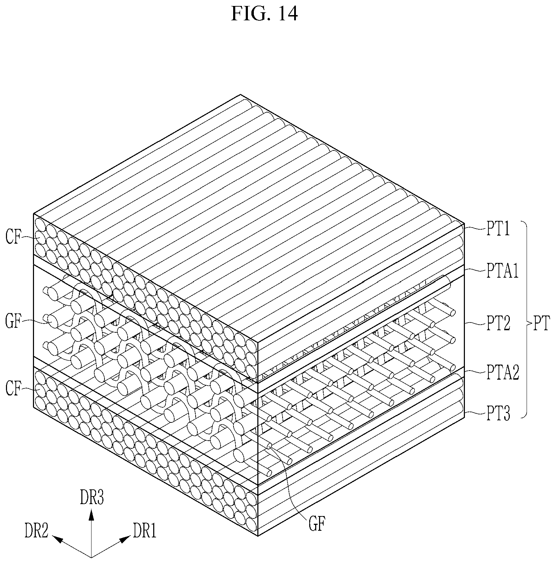

FIG. 14 shows a plate according to another embodiment. Referring to FIG. 14, the first auxiliary layer (PTA1) is positioned between the first layer (PT1) and the second layer (PT2), and the second auxiliary layer (PTA2) is positioned between the second layer (PT2) and the third layer (PT3). Descriptions of the first layer (PT1) to the third layer (PT3) correspond to what is described with reference to FIG. 9 so they will be omitted. Descriptions of materials and thicknesses of the first auxiliary layer (PTA1) and the second auxiliary layer (PTA2) correspond to what is described with reference to FIG. 13 so they will be omitted.

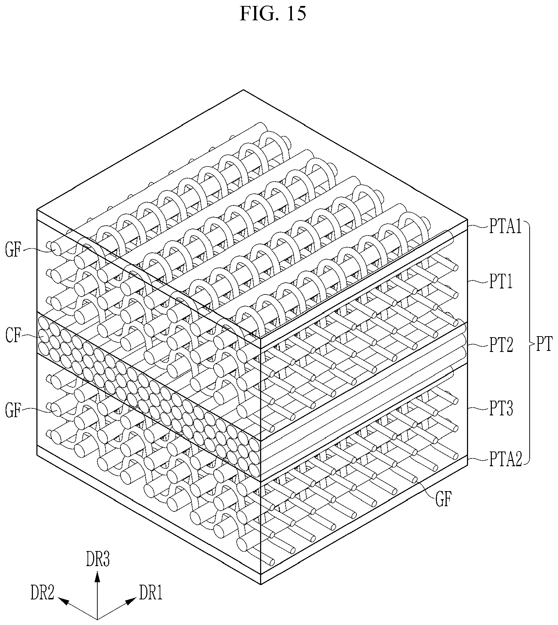

FIG. 15 shows a plate according to another embodiment. FIG. 15 corresponds to an embodiment described with reference to FIG. 13 except that the first layer (PT1) and the third layer (PT3) are isotropic and the second layer (PT2) is anisotropic. No detailed descriptions of the same constituent elements will be provided.

The first layer (PT1) and the third layer (PT3) may include glass fiber reinforced plastic (GFRP), and the second layer (PT2) may include carbon fiber reinforced plastic (CFRP). Carbon fibers (CF) may be positioned in parallel to be perpendicular to the direction in which the plate (PT) is bent on the second layer (PT2).

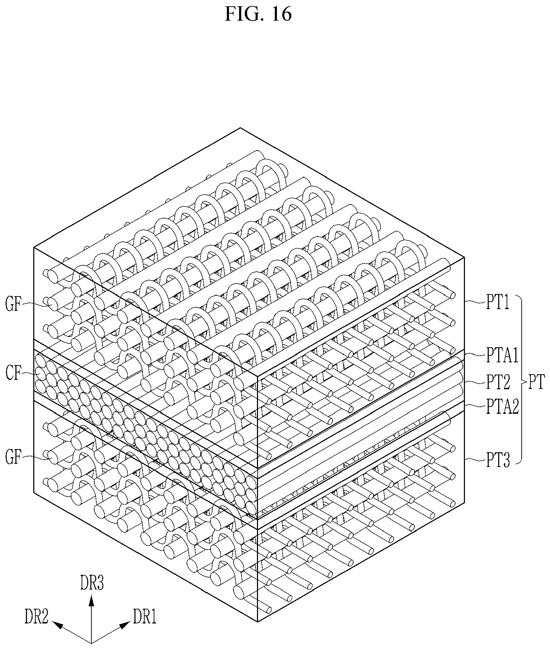

FIG. 16 shows a plate according to another embodiment. FIG. 16 corresponds to an embodiment described with reference to FIG. 14 except that the first layer (PT1) and the third layer (PT3) are isotropic and the second layer (PT2) is anisotropic. No detailed descriptions of the same constituent element will be provided.

The first layer (PT1) and the third layer (PT3) may include glass fiber reinforced plastic (GFRP), and the second layer (PT2) may include carbon fiber reinforced plastic (CFRP). The carbon fibers (CF) may be positioned in parallel to be perpendicular to the direction in which the plate (PT) is bent on the second layer (PT2).

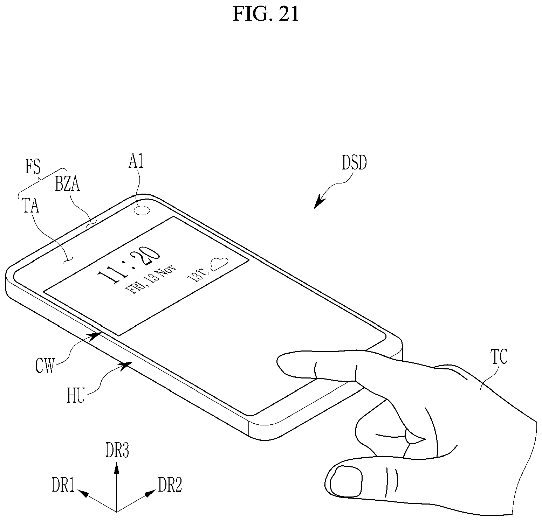

A display device including a plate according to the present embodiment will now be described with reference to drawings. FIG. 17 shows a cross-section of a display device according to the present embodiment with constituent elements. A detailed structure thereof will be described in a later portion of the present specification with reference to FIG. 21.

Referring to FIG. 17, the display device according to the present embodiment includes a display module (DM) and a cover window (CW) positioned on the display module (DM). The cover window (CW) may include a window (WD) and a window protecting member (WDP) positioned on an upper portion of the window (WD). The window protecting member (WDP) may be adhered to an upper side of the window (WD) through the first adhesive layer 111. The window protecting member (WDP) may protect the window (WD) from external impacts, and may prevent the upper side of the window (WD) from being scratched or minimize the scratch. The window protecting member (WDP) may include a polymer resin. However, the present invention is not limited thereto, and the window protecting member (WDP) may include an inorganic material.

The window (WD) may be made of glass. However, the present invention is not limited thereto. The window (WD) may include a polymer resin.

The cover window (CW) and the display module (DM) may be adhered with the second adhesive layer 112.

A second protecting member (PL2) may be positioned on a lower portion of the display panel (DP). Although not shown in FIG. 17, the second protecting member (PL2) may be adhered to the lower side of the display panel (DP) through the adhesive layer. The second protecting member (PL2) may be disposed on the lower portion of the display panel (DP) to support the display panel (DP) and protect the display panel (DP) from external impacts. The second protecting member (PL2) may be made of a polymer resin such as a polyethylene terephthalate or a polyimide.

A first support member (SB1) may be positioned on the lower portion of the second protecting member (PL2). Although not shown, the first support member (SB1) may be adhered to the second protecting member (PL2) through an adhesive layer.

The first support member (SB1) may be disposed on the lower portion of the display panel (DP) to support the display panel (DP) and protect the display panel (DP) from external impacts. The first support member (SB1) may be made of a polymer resin such as a polyethylene terephthalate or a polyimide.

A plate (PT) may be positioned on the lower portion of the first support member (SB1). The descriptions of the plate (PT) correspond to the descriptions provided with reference to FIG. 1 to FIG. 14. That is, the plate (PT) of the FIG. 17 may be one of FIG. 5, FIG. 6, FIG. 9, and FIG. 12 to FIG. 16. No detailed descriptions of the same constituent elements will be provided.

That is, the plate (PT) may include a folding area (FA) and a peripheral folding area (NFA). A plurality of holes (H) may be formed in the folding area (FA) so the display device may be bent. As described above, the plate (PT) may have a structure in which materials with isotropic/anisotropic elasticity coefficients are stacked as multi-layered. For example, the materials may be stacked in order of isotropic, anisotropic, and isotropic layers, or may be stacked in order of anisotropic, isotropic, and anisotropic layers. The anisotropic layer may be carbon fiber reinforced plastic (CFRP) in which the carbon fibers are arranged in one direction. The direction in which the carbon fibers are arranged may be perpendicular to the direction in which the plate (PT) is bent. That is, the plate (PT) has a high elasticity coefficient in the direction in which the carbon fibers are arranged, and the plate (PT) has a low elasticity coefficient in the direction that is perpendicular to the direction in which the carbon fibers are arranged. Hence, the plate (PT) may be well bent in the direction that is perpendicular to the direction in which the carbon fibers are arranged. A relationship between the moduli of the plate (PT) in the respective directions and a folding axis will be described in a later portion of the present specification.

Referring to FIG. 17, a digitizer (DT) may be positioned on the lower portion of the plate (PT). The digitizer (DT) may sense intensity and a direction of a signal input by an electronic pen.

In an embodiment, the digitizer (DT) may include a first digitizer (DT1) positioned on a left with respect to the folding axis (FL) and a second digitizer (DT2) positioned on a right of the folding axis (FL).

The digitizer (DT) may be made of a metal. The plate (PT) includes no metal and is made of reinforced plastic, so the plate (PT) may give no influence to the recognition rate of the digitizer (DT). That is, when the plate (PT) has conductivity, the recognition rate of the digitizer (DT) may be reduced, and the plate (PT) according to the present embodiment has no conductivity, so the recognition rate of the digitizer (DT) may not be hindered.

A cushion layer (CS) may be positioned below the digitizer (DT). The cushion layer (CS) may prevent a structure disposed on the cushion layer (CS) from being damaged by external impacts or minimize the damage. In an embodiment, the cushion layer (CS) may include a pressure sensitive adhesive. A detailed configuration of the display device will be described in a later part of the present specification with reference to FIG. 21.

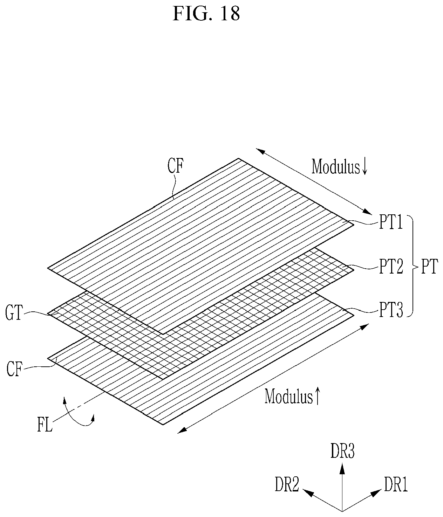

FIG. 18 shows a relationship between moduli of a first layer (PT1), a second layer (PT2), and a third layer (PT3) of a plate (PT) and a folding axis (FL).

Referring to FIG. 18, carbon fibers (CF) are arranged in the first direction (DR1) on the first layer (PT1) and the third layer (PT3). The glass fibers (GF) on the second layer (PT2) are uniformly arranged in the first direction (DR1) and the second direction (DR2).

Therefore, the plate (PT) has a high elasticity coefficient in the first direction (DR1), and has a low elasticity coefficient in the second direction (DR2). The elasticity coefficient of the plate (PT) in the first direction (DR1) may be 40 GPa to 60 GPa. The elasticity coefficient of the plate (PT) in the second direction (DR2) may be 10 GPa to 30 GPa.

In an embodiment, the difference between the elasticity coefficient of the plate (PT) in the first direction (DR1) and the elasticity coefficient of the second direction (DR2) may be 1.5 to 6 times.

The folding axis (FL) is positioned in the first direction (DR1). Therefore, the plate (PT) is folded in the second direction (DR2) with the folding axis (FL) therebetween, and as described above, the elasticity coefficient thereof in the second direction (DR2) is low so the plate (PT) may be well folded.

Referring to FIG. 17, a hole (H) for a folding is positioned in the folding area (FA) of the plate (PT). The hole (H) may be made by using laser beams or abrasive particles.

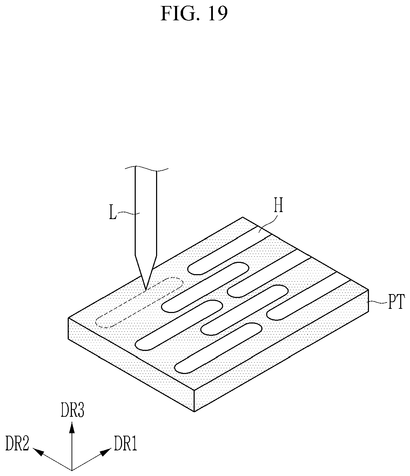

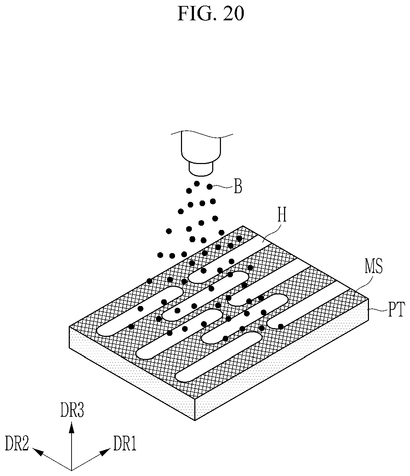

FIG. 19 and FIG. 20 show a method for forming a hole (H) in a folding area (FA) of a plate (PT). Referring to FIG. 19, the hole (H) may be formed by irradiating laser (L) beams to the folding area (FA) of the plate (PT). As shown in FIG. 19, the hole (H) may penetrate the plate (PT). The formation direction of holes (H) is the first direction (DR1) and may be parallel to the direction of the folding axis. The hole (H) may have a shape in which a plurality of holes are positioned in the first direction (DR1). This method needs no additional mask, and may reduce a processing time. A length of a long side of the hole (H) may be 0.2 mm to 7 mm.

Referring to FIG. 20, a mask (MS) may be positioned in the folding area (FA) of the plate (PT) and abrasive particles (B) may be sprayed thereon to form the hole (H). An opening with the same shape as the hole (H) is positioned in the mask (MS), and the plate (PT) of a region corresponding to the opening of the mask (MS). The abrasive particles (B) used in this case may be an alumina oxide, and for example, they may be an alumina oxide with a diameter of 20 µm to 40 µm. The above-noted method is advantageous in processing a wide pattern and may reduce the processing time.

A display device to which a plate is applied according to the present embodiment will now be described in detail with reference to drawings. The configuration to be described hereinafter is, however, an example describing a case of applying a plate according to the present embodiment, and the present disclosure is not limited thereto.

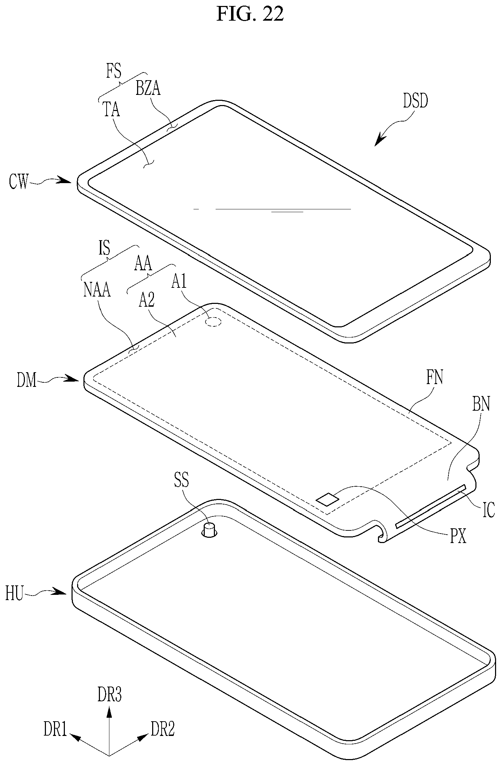

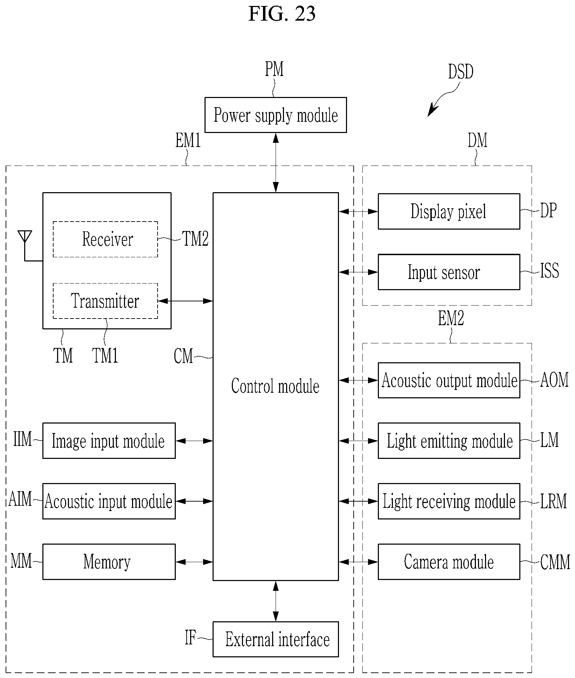

FIG. 21 shows a perspective view of a display device according to an embodiment, FIG. 22 shows an exploded perspective view of a display device according to an embodiment, and FIG. 23 shows a block diagram of a display device according to an embodiment.

The display device (DSD) according to an embodiment is a device for displaying videos or still images, and it may be used as a displaying screen to portable display devices such as mobile phones, smartphones, tablet PCs, mobile communication terminals, personal digital assistants, electronic books, PMPs, GPSs, or UMPCs, and various products such as televisions, laptops, monitors, advertisement boards, or Internet of things (IOT). The display device (DSD) may also be used in wearable devices such as smart watches, watch phones, glasses-type displays, or head mounted displays (HMD). The display device (DSD) may be used as a dashboard of a vehicle, a center information display (CID) disposed on a center fascia or a dashboard of a vehicle, a room mirror display replacing a side-view mirror of a vehicle, and a display disposed on a rear side of a front seat as an entertainment for a back seat of a vehicle. FIG. 21 shows that a display device (DSD) is used as a smartphone for better comprehension and ease of description.

Referring to FIG. 21 and FIG. 22, the display device (DSD) may display images on display sides that are parallel to the first direction (DR1) and the second direction (DR2) toward the third direction (DR3). The images may include videos and still images. FIG. 21 illustrates a watch as an embodiment of the image.

In the present embodiment, front sides (or upper sides) and rear sides (or lower sides) of respective members are defined with respect to directions in which the images are displayed. The front sides and the rear sides may oppose each other in the third direction (DR3), and normal directions of the respective front sides and the rear sides may be parallel to the third direction (DR3).

The display device (DSD) may sense an input (TC) of a user applied from an outside. The input (TC) of the user may include various types of external inputs such as part of the user, light, heat, or pressures. The input (TC) of the user is illustrated to be a hand of the user applied to the front side in an embodiment. However, the present invention is not limited thereto. The input (TC) of the user may be provided in various forms, and the display device (DSD) may sense the input (TC) of the user applied to the lateral side or the rear side of the display device (DSD) depending on configurations of the display device (DSD).

A front side (FS) of the cover window (CW) may define the front side of the display device (DSD). The front side (FS) of the cover window (CW) may include a transmission area (TA) and a bezel area (BZA). The transmission area (TA) may be an optically transparent region. For example, the transmission area (TA) may be a region with visible ray transmittance of equal to or greater than about 90%.

The bezel area (BZA) may be positioned near the transmission area (TA) and on a circumference of the transmission area (TA). The bezel area (BZA) may have a relatively low light transmittance compared to the transmission area (TA). The bezel area (BZA) may include an opaque material for blocking light. The bezel area (BZA) may have a predetermined color. The bezel area (BZA) may be defined by a bezel layer provided in addition to a transparent substrate defining the transmission area (TA), or may be defined by an ink layer made when inserted into or colored on the transparent substrate.

A first area (A1) may be positioned in the transmission area (TA). The first area (A1) may overlap at least part of the electronic module (SS). FIG. 21 illustrates the first area (A1) disposed to have a circular shape on a top right of the display device (DSD), and the present invention is not limited thereto. The first area (A1) may be multiple and may have various shapes depending on the number and shapes of the electronic module (SS).

The display device (DSD) may receive external signals for the electronic module (SS) through the first area (A1), or may provide signals output by the electronic module (SS) to the outside. In an embodiment, as the first area (A1) overlaps the transmission area (TA), an area of the bezel area (BZA) may be reduced.

Referring to FIG. 21 and FIG. 22, the display device (DSD) may include a cover window (CW), a housing (HU), a display module (DM), and an electronic module (SS). In an embodiment, the cover window (CW) may be combined to the housing (HU) to form an exterior of the display device (DSD).

The cover window (CW) may include an insulating panel. For example, the cover window (CW) may be made of glass, plastic, or a combination thereof.

The display module (DM) may include an entire side (IS) including the active area (AA) and the non-active area (NAA). The active area (AA) may be activated by an electrical signal.

The active area (AA) may display images and may sense external inputs (TC). A plurality of pixels (PX) may be disposed in the active area (AA).

The transmission area (TA) may overlap at least part of the active area (AA). For example, the transmission area (TA) may overlap the entire side of the active area (AA) or may overlap at least part of the active area (AA). The user may watch the images through the transmission area (TA) or may provide the external input (TC). However, the present invention is not limited thereto. For example, the region in which the images are displayed may be separated from the region in which the external input (TC) is sensed in the active area (AA).

The non-active area (NAA) may overlap at least part of the bezel area (BZA). The non-active area (NAA) may be covered by the bezel area (BZA). The non-active area (NAA) may be provided near the active area (AA). The non-active area (NAA) may surround the active area (AA). The non-active area (NAA) may not display images. Driving circuits for driving the active area (AA) or driving wires may be disposed in the non-active area (NAA).

The display module (DM) may be assembled in a plane state in which the active area (AA) and the non-active area (NAA) face the cover window (CW). However, the present invention is not limited thereto. A portion of the peripheral area (NAA) of the display module (DM) may be bent. Part of the non-active area (NAA) may face the rear side of the display device (DSD), and the bezel area (BZA) that is visible on the entire side of the display device (DSD) may be reduced. In another way, the display module (DM) may be assembled while part of the active area (AA) is bent. In another way, the non-active area (NAA) may be omitted from the display module (DM).

The active area (AA) may include a first area (A1) and a second area (A2). The first area (A1) may have relatively high light transmittance, compared to the second area (A2). The first area (A1) may have a relatively small area, compared to the second area (A2). The first area (A1) may be defined to be a region that corresponds to a region in which the electronic module (SS) of the display module (DM) is disposed in the housing (HU). In an embodiment, the first area (A1) is shown to have a circular shape, but the present invention is not limited thereto, and the first area (A1) may have various shapes such as a polygon, an oval, or a figure with at least one curve.

The second area (A2) may be near the first area (A1). The second area (A2) may enclose the entire first area (A1). However, the present invention is not limited thereto. The second area (A2) may partly enclose the first area (A1).

Referring to FIG. 23, the display module (DM) may include a display panel (DP) and an input sensor (ISS). The display panel (DP) may generate images. The images generated by the display panel (DP) may be displayed to the front side through the transmission area (TA) and may be seen to the user from the outside.

The input sensor (ISS) may sense the external input (TC) applied from the outside. The input sensor (ISS) may sense the external input (TC) provided to the cover window (CW).

Referring to FIG. 22, the display module (DM) may include a flat portion (FN) and a bending portion (BN). The flat portion (FN) may be assembled to be substantially parallel to a plane defined by the first direction (DR1) and the second direction (DR2). The active area (AA) may be provided to the flat portion (FN).

The bending portion (BN) extends from the flat portion (FN), and at least part of the bending portion (BN) may be bent. The bending portion (BN) may be bent from the flat portion (FN) and may be assembled to be positioned on the rear side of the flat portion (FN). The bending portion (BN) overlaps the flat portion (FN) in a plan view when it is assembled, so the bezel area (BZA) of the display device (DSD) may be reduced. However, the present invention is not limited thereto. For example, the bending portion (BN) may be omitted.

The driving circuit (IC) may be mounted on the bending portion (BN). The driving circuit (IC) may be provided as a chip. However, the present invention is not limited thereto. The driving circuit (IC) may be provided on an additional circuit board and may be electrically connected to the display module (DM) through a flexible film.

The driving circuit (IC) may be electrically connected to the active area (AA) and may transmit electrical signals to the active area (AA). For example, the driving circuit (IC) may include a data driving circuit, and may provide data signals to the pixels (PX) disposed in the active area (AA). In another way, the driving circuit (IC) may include a touch driving circuit, and may be electrically connected to the input sensor disposed in the active area (AA). The driving circuit (IC) may be designed to include various types of circuits in addition to the above-noted circuits and provide various electrical signals to the active area (AA).

The display device (DSD) may further include a main circuit board electrically connected to the driving circuit (IC). The main circuit board may include various types of driving circuits for driving the display module (DM) or a connector for supplying power. The main circuit board may be a rigid printed circuit board (PCB) or a flexible circuit board.

The electronic module (SS) may be disposed on the lower portion of the display module (DM). The electronic module (SS) may receive an external input transmitted through the first area (A1) or may output a signal through the first area (A1). As the first area (A1) with relatively high transmittance is provided in the active area (AA), the electronic module (SS) may overlap the active area (AA), and the area (or size) of the bezel area (BZA) may be reduced.

Referring to FIG. 23, the display device (DSD) may include a display module (DM), a power supply module (PM), a first electronic module (EM1), and a second electronic module (EM2). The display module (DM), the power supply module (PM), the first electronic module (EM1), and the second electronic module (EM2) may be electrically connected to each other. FIG. 23 exemplifies a display panel (DP) and an input sensor (ISS) from among constitutional elements of the display module (DM).

The power supply module (PM) may supply power for general operations of the display device (DSD). The power supply module (PM) may include a conventional battery module.

The first electronic module (EM1) and the second electronic module (EM2) may include various types of functional modules for operating the display device (DSD). The first electronic module (EM1) may be mounted on a mother board electrically connected to the display panel (DP), or may be mounted on another substrate and may be electrically connected to the mother board through a connector (not shown).

The first electronic module (EM1) may include a control module (CM), a wireless communication module (TM), an image input module (IIM), an acoustic input module (AIM), a memory (MM), and an external interface (IF). Some of the modules may not be mounted on the mother board, and may be electrically connected to the mother board through a flexible circuit board.

The control module (CM) may control general operations of the display device (DSD). The control module (CM) may be a microprocessor. For example, the control module (CM) may activate or deactivate the display panel (DP). The control module (CM) may control other modules such as the image input module (IIM) or the acoustic input module (AIM) based on a touch signal received from the display panel (DP).

The wireless communication module (TM) may transmit/receive wireless signals to/from other terminals by use of a Bluetooth or a WIFI circuit. The wireless communication module (TM) may transmit/receive voice signals by using a general communication circuit. The wireless communication module (TM) includes a transmitter (TM1) for modulating a signal and transmitting the modulated signal, and a receiver (TM2) for demodulating the received signal.

The image input module (IIM) may process image signals and may convert the same into image data displayable to the display module (DM). The acoustic input module (AIM) may receive external acoustic signals by use of a microphone in a recording mode or a voice recognition mode and may convert them into electrical voice data.

The external interface (IF) may function as an interface connected to an external charger, a wire/wireless data port, a card socket (e.g., a memory card or a SIM/UIM card), etc.

The second electronic module (EM2) may include an acoustic output module (AOM), a light emitting module (LM), a light receiving module (LRM), and a camera module (CMM). The second electronic module (EM2) may be mounted on the mother board, it may be mounted on an additional substrate and may be electrically connected to the display module (DM) through a connector (not shown), or it may be electrically connected to the first electronic module (EM1).

The acoustic output module (AOM) may convert the acoustic data received from the wireless communication module (TM) or the acoustic data stored in the memory (MM) and may output converted data to the outside.

The light emitting module (LM) may generate light and may output it. The light emitting module (LM) may output infrared rays. For example, the light emitting module (LM) may include an LED element. For example, the light receiving module (LRM) may sense the infrared rays. The light receiving module (LRM) may be activated when it senses the infrared rays at equal to or greater than a predetermined level. The light receiving module (LRM) may include a CMOS sensor. The infrared rays generated by the light emitting module (LM) may be output, they may be reflected by an external subject (e.g., a finger or a face of a user), and the reflected infrared rays may be input to the light receiving module (LRM). The camera module (CMM) may photograph external images.

The electronic module (SS) may include at least one of the first electronic module (EM1) and the second electronic module (EM2). For example, the electronic module (SS) may include at least one of a camera, a speaker, a light sensor, and a heat sensor. The electronic module (SS) may sense a received external subject through the front side or may provide a sound signal such as voice through the front side. The electronic module (SS) may include a plurality of constitutional elements, and is not limited to one embodiment.

Referring to FIG. 22, the housing (HU) may be combined to the cover window (CW). The cover window (CW) may be disposed on the front side of the housing (HU). The housing (HU) may be combined to the cover window (CW) to provide a predetermined receiving space. The display module (DM) and the electronic module (SS) may be received in a predetermined receiving space provided between the housing (HU) and the cover window (CW).

The housing (HU) may include a material with relatively high rigidity. For example, the housing (HU) may include glass, plastic, or metal, or may include a plurality of frames and/or plates made with a combination thereof. The housing (HU) may stably protect constitutional elements of the display device (DSD) received in an internal space from external impacts.

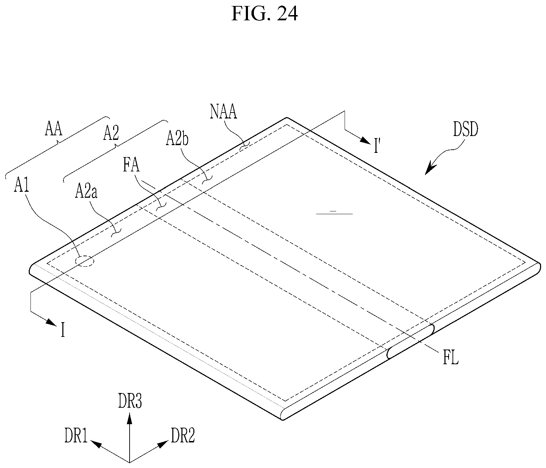

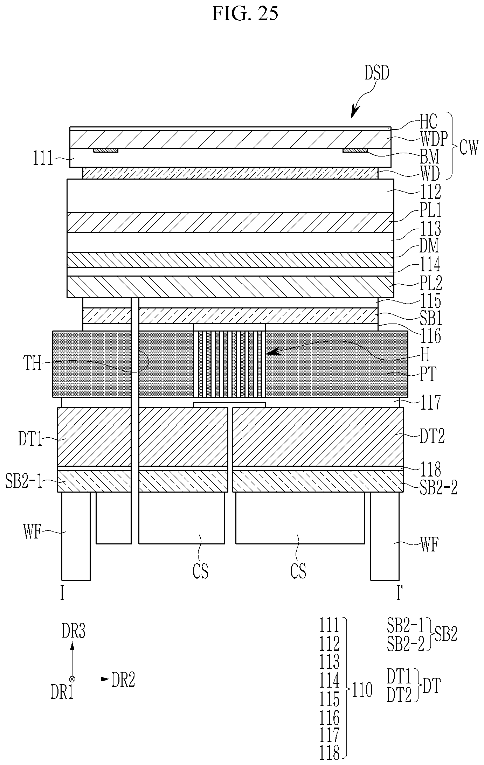

FIG. 24 shows a perspective view of a display device according to an embodiment, and FIG. 25 shows a cross-sectional view of a display device according to an embodiment. FIG. 24 illustrates that a foldable display device is provided as a display device (DSD), and FIG. 25 illustrates a stacking relationship of members configuring the display device (DSD), showing members configuring the display device (DSD). FIG. 25 shows a cross-sectional view with respect to a line I-I' of FIG. 24.

Referring to FIG. 24, the display device (DSD) may be a foldable display device (DSD). The display device (DSD) may be folded with respect to a folding axis (FL). For example, the display device (DSD) may be folded with respect to the folding axis (FL).

The display device (DSD) may include a housing, a display module, and a cover window.

The display module may include an active area (AA) and a non-active area (NAA). The active area (AA) displays images, and may sense external inputs. A plurality of pixels to be described may be disposed in the active area (AA).

The active area (AA) may include a first area (A1) and a second area (A2). The second area (A2) may include a second-1 area (A2a), a second-2 area (A2b), and a folding area (FA). The second-1 area (A2a) and the second-2 area (A2b) may be positioned on a left side and a right side with respect to the folding axis (FL), and the folding area (FA) may be positioned between the second-1 area (A2a) and the second-2 area (A2b). However, the present invention is not limited thereto.

Referring to FIG. 25, the display device (DSD) may include a cover window (CW), a first protecting member (PL1), a display module (DM), a second protecting member (PL2), a first support member (SB1), a plate (PT), a digitizer (DT), a second support member (SB2), a cushion layer (CS), a waterproof member (WF), and an adhesive layer 110 positioned between structures. The adhesive layer 110 may include a first adhesive layer 111 to an eighth adhesive layer 118.

The first protecting member (PL1) may be positioned on an upper portion of the display module (DM). The first protecting member (PL1) may be adhered to an upper side of the display module (DM) through the third adhesive layer 113. The third adhesive layer 113 may be a pressure sensitive adhesive (PSA). However, the present invention is not limited thereto. The third adhesive layer 113 may be provided with an optically clear adhesive (OCA).

The first protecting member (PL1) may be positioned on an upper portion of the display module (DM) to protect the display module (DM) from the external impacts. The first protecting member (PL1) may be made of a polymer resin. For example, the first protecting member (PL1) may include a polymer resin such as polyethersulfone, polyacrylate, polyether imide, polyethylene naphthalate, polyethylene terephthalate, polyphenylene sulfide, polyarylate, polyimide, polycarbonate, or cellulose acetate propionate. However, the present invention is not limited thereto. The first protecting member (PL1) may be made of a material such as glass or quartz.

The cover window (CW) may be disposed on an upper portion of the first protecting member (PL1). The cover window (CW) may be adhered to the first protecting member (PL1) through the second adhesive layer 112.

The cover window (CW) may include a window (WD), an opaque layer (BM), a window protecting member (WDP), and a hard coating layer (HC). The window (WD) may be made of glass. However, the present invention is not limited thereto. The window (WD) may be made of a polymer resin.

The window protecting member (WDP) may be disposed on an upper portion of the window (WD). The window protecting member (WDP) may be adhered to an upper side of the window (WD) through the first adhesive layer 111. The window protecting member (WDP) may protect the window (WD) from external impacts, and may prevent the upper side of the window (WD) from being scratched or minimize the scratch. The window protecting member (WDP) may be made of a polymer resin. However, the present invention is not limited thereto. The window protecting member (WDP) may be made of an inorganic material.

The opaque layer (BM) may be provided between the window protecting member (WDP) and the first adhesive layer 111. However, the present invention is not limited thereto. The opaque layer (BM) may be provided on part of the window protecting member (WDP). The opaque layer (BM) may be made of an opaque material so that wires or circuits of the display module (DM) may not be seen from the outside. A portion on which the opaque layer (BM) is disposed may be the bezel area (BZA).

A hard coating layer (HC) may be disposed on an upper portion of the window protecting member (WDP). The hard coating layer (HC) may be made of an organic material such as a polymer resin. However, the present invention is not limited thereto. The hard coating layer (HC) may be made of an inorganic material.

The hard coating layer (HC) may be an outermost layer of the cover window (CW). The outermost layer of the cover window (CW) may represent an outermost layer of the display device (DSD). The outermost layer of the cover window (CW) is touched by the user, and when the outermost layer of the cover window (CW) is the window (WD) or the window protecting member (WDP), the touching felt by the user may be deteriorated. The outermost layer of the cover window (CW) is provided as the hard coating layer (HC), and a smooth and soft touch may be provided to the user.

The second protecting member (PL2) may be disposed on the lower portion of the display module (DM). The second protecting member (PL2) may be adhered to the lower side of the display module (DM) through the fourth adhesive layer 114. The second protecting member (PL2) may be disposed on the lower portion of the display module (DM) to support the display module (DM) and protect the display module (DM) from the external impacts. The second protecting member (PL2) may be made of a polymer resin such as polyethylene terephthalate or polyimide.

The first support member (SB1) may be disposed on a lower portion of the second protecting member (PL2). The first support member (SB1) may be adhered to the second protecting member (PL2) through the fifth adhesive layer 115. The first support member (SB1) may be positioned on the lower portion of the display module (DM) and may support the display module (DM). The first support member (SB1) may be made of a polymer resin such as polyethylene terephthalate or polyimide.

The plate (PT) may be positioned on the lower portion of the first support member (SB1). The plate (PT) may be adhered to the first support member (SB1) through a sixth adhesive layer 116. The sixth adhesive layer 116 may not be installed in a portion corresponding to the folding area (FA, refer to FIG. 24).

The plate (PT) may be positioned on the lower portion of the display module (DM) and may support the display module (DM). The plate (PT) may be positioned on the upper portion of the digitizer (DT) and may protect the digitizer (DT) from the external impacts.

The plate (PT) may include a plurality of holes (H). The plate (PT) may be folded with respect to the folding axis (FL) by the hole (H). That is, when the display device (DSD) is folded, the plate (PT) may be folded with respect to the folding axis (FL). The plate (PT) except for the hole (H) may have a flat upper side.

The descriptions of the plate (PT) correspond to the above-provided descriptions. No detailed descriptions of the same constituent elements will be provided.

That is, the plate (PT) may have a stacked structure of isotropic/anisotropic materials. The plate (PT) may include a first layer, a second layer, and a third layer, and the first layer and third layer may be anisotropic, and the second layer may be isotropic. In another way, the first layer and the third layer may be isotropic and the second layer may be anisotropic. As the plate (PT) includes isotropic and anisotropic layers, rigidity of the plate (PT) may be maintained and the plate (PT) may be well bent.

Glass fiber reinforced plastic may be applied as an isotropic material, and carbon fiber reinforced plastic may be applied as an anisotropic material. In the case of the layer including carbon fiber reinforced plastic, the carbon fibers may be arranged in the first direction that is parallel to the folding axis (FL). Therefore, the plate (PT) may have a large elasticity coefficient in the first direction (DR1), and may have a relatively small elasticity coefficient in the second direction (DR2). The plate (PT) is folded in the second direction (DR2) with respect to the folding axis (FL) positioned in the first direction (DR1), so the rigidity of the plate (PT) may be maintained and the plate (PT) may be well folded.

That is, the plate (PT) shown in FIG. 25 may be one of those shown in FIG. 5, FIG. 6, FIG. 9, and FIG. 12 to FIG. 16, and it is not limited thereto. No detailed descriptions of the same constituent elements will be provided.

The digitizer (DT) may be disposed on the lower portion of the plate (PT). The digitizer (DT) may be adhered to a lower portion of the plate (PT) through the seventh adhesive layer 117. The seventh adhesive layer 117 may be positioned on the lower portion of the plate (PT), and may prevent foreign particles from being input into the holes (H) of the plate (PT) or minimize the input.

The digitizer (DT) may include a body layer and/or a pattern layer. The digitizer (DT) may sense signals that are input from an electronic pen through the pattern layer. Particularly, the digitizer (DT) may sense intensity and direction of the signals that are input by the electronic pen, etc.

When the digitizer (DT) is integrally provided, and the display device (DSD) is folded, the body layer and/or the pattern layer of the digitizer (DT) may be cracked. The digitizer (DT) may include a first digitizer (DT1) positioned on a left with respect to the folding axis (FL) and a second digitizer (DT2) positioned on a right with respect to the folding axis (FL). The first digitizer (DT1) may overlap at least part of the second-1 area (A2a) of FIG. 24, and the second digitizer (DT2) may overlap at least part of the second-2 area (A2b). The first digitizer (DT1) may overlap at least part of the folding area (FA, refer to FIG. 24), and the second digitizer (DT2) may overlap at least part of the folding area (FA, refer to FIG. 24).

The first digitizer (DT1) and the second digitizer (DT2) may be spaced from each other in the second direction (DR2) with the folding axis (FL) therebetween. That is, the digitizer (DT) may be made in a separated type and not in an integrated type. As the digitizer (DT) has a separated structure, the body layer and/or the pattern layer disposed in the folding area (FA) may be prevented or minimized from being cracked.

In addition, the digitizer (DT) in a separated type overlaps at least part of the folding area (FA, refer to FIG. 24), so it may receive signals in the folding area (FA), thereby improving convenience of the user.

The second support member (SB2) may be disposed on the lower portion of the digitizer (DT). The second support member (SB2) may be adhered to the lower side of the digitizer (DT) through the eighth adhesive layer 118. The eighth adhesive layer 118 may not be provided to a portion that corresponds to the folding area (FA, refer to FIG. 24).

The second support member (SB2) may transmit heat generated by the digitizer (DT) to the outside. In this case, the second support member (SB2) may include a metal with excellent heat transmission efficiency. In another way, the second support member (SB2) may be made of graphite with high thermal conductivity in a planar direction. When the second support member (SB2) made of graphite is provided, the second support member (SB2) may be thinner than the second support member (SB2) made of a metal. The second support member (SB2) may be disposed on the lower portion of the digitizer (DT) to support the digitizer (DT) and protect the digitizer (DT) from external impacts.

The second support member (SB2) may include a second-1 support member (SB2-1) positioned on the left with respect to the folding axis (FL) and a second-2 support member (SB2-2) positioned on the right of the folding axis (FL).

A cushion layer (CS) may be disposed on the lower portion of the second support member (SB2). The cushion layer (CS) may prevent the digitizer (DT) disposed on the cushion layer (CS) from being damaged by the external impacts or minimize the damage. The cushion layer (CS) may include a pressure sensitive adhesive.

A waterproof member (WF) may be disposed on an outside of the cushion layer (CS). The waterproof member (WF) may block or absorb moisture input from the outside of the display device (DSD) to prevent the constitutional elements of the display device (DSD) from being damaged by the moisture or minimize the damage. A tape or a sponge may be provided as the waterproof member (WF).

Through-holes (TH) corresponding to the first area (A1) may be disposed in the fifth adhesive layer 115, the first support member (SB1), the sixth adhesive layer 116, the plate (PT), the seventh adhesive layer 117, the digitizer (DT), the eighth adhesive layer 118, the second support member (SB2), and the cushion layer (CS). However, the present invention is not limited thereto. The through-hole may not be provided in at least one of the fifth adhesive layer 115, the first support member (SB1), the sixth adhesive layer 116, the plate (PT), the seventh adhesive layer 117, the digitizer (DT), the eighth adhesive layer 118, the second support member (SB2), and the cushion layer (CS). Although not shown, the through-hole may be additionally provided in the second protecting member (PL2).

As the through-holes (TH) corresponding to the first area (A1) are disposed in the fifth adhesive layer 115, the first support member (SB1), the sixth adhesive layer 116, the plate (PT), the seventh adhesive layer 117, the digitizer (DT), the eighth adhesive layer 118, the second support member (SB2), and the cushion layer (CS), light transmittance of the first area (A1) may be improved and the display device with the performance improved electronic module (SS) may be provided.

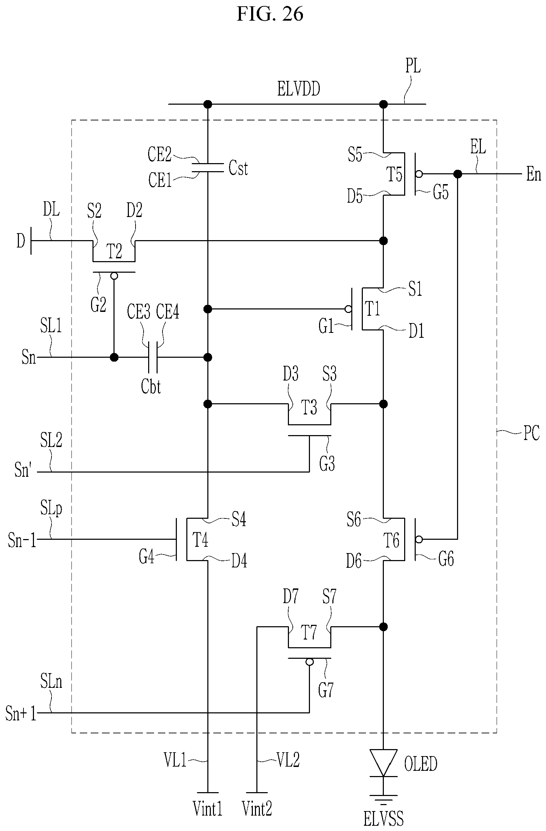

FIG. 26 shows an equivalent circuit diagram of a pixel according to an embodiment. In detail, FIG. 26 illustrates an equivalent circuit diagram of a pixel (PX) shown in display module (DM, refer to FIG. 22). The equivalent circuit diagram of the pixel (PX) shown in FIG. 26 has a size difference, and may be identically applied to the second pixel (PXm) disposed in the second area (A2) as well as the first pixel (PXa) disposed in the first area (A1).

The pixel circuit (PC) may include a first transistor (T1), a second transistor (T2), a third transistor (T3), a fourth transistor (T4), a fifth transistor (T5), a sixth transistor (T6), a seventh transistor (T7), a first storage capacitor (Cst), and a second storage capacitor (Cbt). At least one of the first to seventh transistors (T1 to T7) may be omitted.

The first to seventh transistors (T1, T2, T3, T4, T5, T6, and T7) and the first and second storage capacitors (Cst and Cbt) may be connected to signal lines, a first initialization voltage line (VL1), a second initialization voltage line (VL2), and a driving voltage line (PL). The signal lines may include a data line (DL), a first scan line (SL1), a second scan line (SL2), a previous scan line (SLp), a posterior scan line (SLn), and an emission control line (EL). The signal lines, the first and second initialization voltage lines (VL1 and VL2), and/or the driving voltage line (PL) may be shared by neighboring pixels.

The driving voltage line (PL) may transmit a first power voltage (ELVDD) to the first transistor (T1). The first initialization voltage line (VL1) may transmit a first initialization voltage (Vint1) for initializing the first transistor (T1) to the pixel circuit (PC). The second initialization voltage line (VL2) may transmit a second initialization voltage (Vint2) for initializing the light-emitting device (OLED) to the pixel circuit (PC).

The third transistor (T3) and the fourth transistor (T4) from among the first to seventh transistors (T1 to T7) may be realized with n-channel MOSFETs (NMOS), and the others may be realized with p-channel MOSFETs (PMOS). However, the present invention is not limited thereto.

In the present specification, "electrically connected between a transistor and a signal line or between a transistor and a transistor" represents that "a source, a drain, and a gate of a transistor have an integral shape with a signal line or are connected thereto through a connection electrode."

The first transistor (T1) may control a driving current flowing to the light-emitting device (OLED) from the driving voltage line (PL) according to a gate voltage. The first transistor (T1) may include a gate (G1) connected to a first electrode (CE1) of the first storage capacitor (Cst), and a source (S1) connected to the driving voltage line (PL) of the fifth transistor (T5). The first transistor (T1) may include a drain (D1) connected to the light-emitting device (OLED) through the sixth transistor (T6).

The second transistor (T2) may receive a data voltage (D) in response to the first scan signal (Sn). The second transistor (T2) may transmit the data voltage (D) to the source (S1) of the first transistor (T1) in response to the first scan signal (Sn). The second transistor (T2) may include a gate (G1) connected to the first scan line (SL1), a source (S2) connected to the data line (DL), and a drain (D2) connected to the source (S1) of the first transistor (T1).

The first storage capacitor (Cst) may be connected between the driving voltage line (PL) and the first transistor (T1). The first storage capacitor (Cst) may include a second electrode (CE2) connected to the driving voltage line (PL), and a first electrode (CE1) connected to the gate (G1) of the first transistor (T1). The first storage capacitor (Cst) may store a difference between the first driving voltage (ELVDD) applied to the driving voltage line (PL) and the gate voltage of the first transistor (T1), and may maintain the gate voltage of the first transistor (T1).

The third transistor (T3) may be coupled in series between the drain (D1) and the gate (G1) of the first transistor (T1), and may connect the drain (D1) and the gate (G1) of the first transistor (T1) in response to the second scan signal (Sn'). The third transistor (T3) may include a gate (G3) connected to the second scan line (SL2), a source (S3) connected to the drain (D1) of the first transistor (T1), and a drain (D3) connected to the gate (G1) of the first transistor (T1). The third transistor (T3) may be configured with a plurality of transistors coupled to each other in series and controlled by the first scan signal (Sn). The third transistor (T3) may be omitted.

When the third transistor (T3) is turned on in response to the second scan signal (Sn'), the drain (D1) and the gate (G1) of the first transistor (T1) may be connected to each other and the first transistor (T1) may be diode-connected.

The fourth transistor (T4) may apply the first initialization voltage (Vint1) to the gate (G1) of the first transistor (T1) in response to the previous scan signal (Sn-1). The fourth transistor (T4) may include a gate (G4) connected to the previous scan line (SLp), a source (S4) connected to the gate (G1) of the first transistor (T1), and a drain (D4) connected to the first initialization voltage line (VL1). The fourth transistor (T4) may be configured with a plurality of transistors coupled to each other in series and controlled by the previous scan signal (Sn-1). The fourth transistor (T4) may be omitted.

The fifth transistor (T5) may connect the driving voltage line (PL) and the source (S1) of the first transistor (T1) in response to an emission control signal (En). The fifth transistor (T5) may include a gate (G5) connected to the emission control line (EL), a source (S5) connected to the driving voltage line (PL), and a drain (D5) connected to the source (S1) of the first transistor (T1). The fifth transistor (T5) may be omitted.

The sixth transistor (T6) may connect the drain (D1) of the first transistor (T1) and an anode of the light-emitting device (OLED) in response to the emission control signal (En). The sixth transistor (T6) may transmit a driving current output by the first transistor (T1) to the anode of the light-emitting device (OLED). The sixth transistor (T6) may include a gate (G6) connected to the emission control line (EL), a source (S6) connected to the drain (D1) of the first transistor (T1), and a drain (D6) connected to the anode of the light-emitting device (OLED). The sixth transistor (T6) may be omitted.

The seventh transistor (T7) may apply the second initialization voltage (Vint2) to the anode of the light-emitting device (OLED) in response to a posterior scan signal (Sn+1). The seventh transistor (T7) may include a gate (G7) connected to the posterior scan line (SLn), a source (S7) connected to the anode of the light-emitting device (OLED), and a drain (D7) connected to the second initialization voltage line (VL2). The seventh transistor (T7) may be omitted.

The seventh transistor (T7) may be connected to the posterior scan line (SLn) as shown in FIG. 26. In another way, the seventh transistor (T7) may be connected to the emission control line (EL) and may be driven according to the emission control signal (En). In another way, the seventh transistor (T7) may be connected to the previous scan line (SLp) and may be driven according to the previous scan signal (SLp).

Positions of the sources and the drains may be exchangeable according to types (p-type or n-type) of the transistors.

The second storage capacitor (Cbt) may include a third electrode (CE3) and a fourth electrode (CE4). The fourth electrode (CE4) of the second storage capacitor (Cbt) may be connected to the first electrode (CE1) of the first storage capacitor (Cst), and the third electrode (CE3) of the second storage capacitor (Cbt) may receive the first scan signal (Sn). The second storage capacitor (Cbt) may compensate a voltage drop at the gate terminal of the first transistor (T1) by increasing the voltage at the gate terminal when providing of the first scan signal (Sn) stops. The second storage capacitor (Cbt) may be omitted.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims.

### [Industrial Applicability]

The present disclosure relates to a display device

## Claims

1. A display device comprising:
a display module;
a plate attached to the display module; and
a digitizer disposed on a lower portion of the plate,
wherein the plate is multi-layered, and
the plate includes a layer with an isotropic elasticity coefficient and a layer with an anisotropic elasticity coefficient.

2. The display device of claim 1, wherein
the layer with an anisotropic elasticity coefficient of the plate includes carbon fiber reinforced plastic in which carbon fibers are arranged in one direction.

3. The display device of claim 1, wherein
a difference between the elasticity coefficient of the layer with an anisotropic elasticity coefficient of the plate in a first direction and the elasticity coefficient of the layer with an anisotropic elasticity coefficient of the plate in a second direction that is perpendicular to the first direction is 2 to 20 times.

4. The display device of claim 1, wherein
the layer with an isotropic elasticity coefficient of the plate is made of glass fiber reinforced plastic in which glass fibers are regularly arranged.

5. The display device of claim 1, wherein
the plate includes a first layer, a second layer, and a third layer,
the first layer and the third layer include a same material and have anisotropic elasticity coefficients, and the second layer has an isotropic elasticity coefficient.

6. The display device of claim 5, wherein
the display device includes a first auxiliary layer contacting the first layer and disposed on an outermost side of the plate and a second auxiliary layer contacting the third layer and disposed on an outermost side of the plate, and
the first auxiliary layer and the second auxiliary layer include metals.

7. The display device of claim 5, wherein
the display device includes a first auxiliary layer disposed between the first layer and the second layer and a second auxiliary layer disposed between the third layer and the second layer, and
the first auxiliary layer and the second auxiliary layer include metals.

8. The display device of claim 1, wherein
the plate includes a first layer, a second layer, and a third layer,
the first layer and the third layer include a same material and have isotropic elasticity coefficients, and
the second layer has an anisotropic elasticity coefficient.

9. The display device of claim 8, wherein
the display device includes a first auxiliary layer contacting the first layer and disposed on an outermost side of the plate and a second auxiliary layer contacting the third layer and disposed on an outermost side of the plate, and
the first auxiliary layer and the second auxiliary layer include metals.

10. The display device of claim 8, wherein
the display device includes a first auxiliary layer disposed between the first layer and the second layer and a second auxiliary layer disposed between the third layer and the second layer, and
the first auxiliary layer and the second auxiliary layer include metals.

11. The display device of claim 1, wherein
a thickness of the plate is 150 µm to 250 µm.

12. The display device of claim 1, wherein
a thickness of the layer with an anisotropic elasticity coefficient of the plate is 100 µm to 150 µm.

13. The display device of claim 1, wherein
a thickness of the layer with an isotropic elasticity coefficient of the plate is 10 µm to 50 µm.

14. The display device of claim 1, wherein
the display device is folded with respect to a folding axis.

15. The display device of claim 14, wherein
the plate includes a folding area overlapping the folding axis and a peripheral folding area not overlapping the folding axis, and
the plate includes a plurality of holes disposed in the folding area.

16. The display device of claim 15, wherein
the folding area and the peripheral folding area are bent in opposite directions.

17. The display device of claim 14, wherein
regarding the layer with an anisotropic elasticity coefficient of the plate,
the elasticity coefficient that is perpendicular to the folding axis is less than the elasticity coefficient that is parallel to the folding axis.

18. The display device of claim 17, wherein
regarding the layer with an anisotropic elasticity coefficient of the plate,
a difference between the elasticity coefficient that is perpendicular to the folding axis and the elasticity coefficient that is parallel to the folding axis is 1.5 to 6 times.

19. A foldable display device comprising:
a display module folded with respect to a folding axis; and
a plate attached to the display module,
wherein an elasticity coefficient of the plate in a direction that is perpendicular to the folding axis is less than an elasticity coefficient that is parallel to the folding axis.

20. The foldable display device of claim 19, wherein
the plate has a multilayer structure, and
the plate includes a carbon fiber reinforced plastic layer in which carbon fibers are arranged in one direction and a glass fiber reinforced plastic layer in which glass fibers are arranged in a regular direction.

21. The foldable display device of claim 19, wherein
the plate includes a first layer, a second layer, and a third layer,
the first layer and the third layer have anisotropic elasticity coefficients and the second layer has an isotropic elasticity coefficient, or
the first layer and the third layer have isotropic elasticity coefficients and the second layer has an anisotropic elasticity coefficient.

22. The foldable display device of claim 19, wherein
the plate includes a folding area overlapping the folding axis and a peripheral folding area not overlapping the folding axis,
the plate includes a plurality of holes disposed in the folding area, and
a thickness of the peripheral folding area of the plate is uniform.

23. The foldable display device of claim 22, wherein
the folding area and the peripheral folding area of the plate are bent in opposite directions.

24. The foldable display device of claim 19, wherein
the foldable display device includes a cover window disposed on a display module, and a digitizer disposed below the plate, and
the digitizer includes a first digitizer disposed on a left with respect to the folding axis and a second digitizer disposed with respect to the folding axis.
